# EUROPÄISCHE PATENTSCHRIFT

(11) **EP 2 274 646 B1**
(45) Veröffentlichungstag und Bekanntmachung des Hinweises auf die Patenterteilung: **25.06.2014**
(21) Anmeldenummer: 09737737.8
(22) Anmeldetag: 28.04.2009
(51) Int. Cl.: G02B 27/22, G06F 3/00

(54) **VORRICHTUNG ZUR VIRTUELLEN DARSTELLUNG EINER LICHTQUELLE SOWIE VERWENDUNGEN DIESER.**
DEVICE FOR THE VIRTUAL REPRESENTATION OF A LIGHT SOURCE AND USE OF SAME
DISPOSITIF DE REPRÉSENTATION VIRTUELLE D'UNE SOURCE LUMINEUSE, ET UTILISATIONS DE CE DISPOSITIF

(30) Priorität: 02.05.2008 DE 102008022011
(43) Veröffentlichungstag der Anmeldung: 19.01.2011
(73) Patentinhaber: Heisenberg, Gernot, 50931 Köln (DE); Göbel, Martin, 53277 Bonn (DE); Nikitin, Igor, 53773 Hennef (DE)
(72) Erfinder: BECKER, Stefanie, 50733 Köln (DE)
(74) Vertreter: Müller-Gerbes Wagner Albiger Patentanwälte
(86) Internationale Anmeldenummer: PCT/DE2009/000587
(87) Internationale Veröffentlichungsnummer: WO 2009/132629

(56) Entgegenhaltungen:
- FR-A- 2 790 575
- GB-A- 2 284 680
- JP-A- 9 120 761

## Beschreibung

Die vorliegende Erfindung betrifft eine Vorrichtung zur virtuellen Darstellung einer Lichtquelle, wie beispielsweise einem einzelnen Lichtpunkt, einer Abbildung oder einer Laufschrift, sowie Verwendungen der virtuellen Darstellung der Lichtquelle, beispielsweise in Form eines virtuellen Schalters.

### Stand der Technik

Es hat in der Vergangenheit nicht an Versuchen gefehlt Vorrichtungen für die virtuelle Darstellung eine Lichtquelle bereitzustellen. Im Sinne der vorliegenden Beschreibung wird dabei unter virtueller Darstellung ein virtuelles Bild eines Licht reflektierenden oder leuchtenden Objektes verstanden, dass frei in den Raum projiziert wird, im Gegensatz zu einem reellen Bild, welches auf einer Oberfläche abgebildet wird. So ist aus der WO82/00911 eine Vorrichtung zur Projektion eines Bildes bekannt, umfassend wenigstens eine Lichtquelle zur Beleuchtung oder Durchleuchtung des zur projizierenden Bildes, die Abbildung selbst sowie eine retroreflektierende Fläche und einen Beamsplitter. Zur Projektion des Bildes wird von der Lichtquelle das Abbild des darzustellenden Bildes auf die retroreflektierende Fläche geworfen. Im Strahlengang zwischen der Lichtquelle und der retroreflektierenden Fläche ist der Beamsplitter angeordnet. Der Beamsplitter überspannt die gesamte Projektionsfläche der Abbildung und schneidet den Strahlengang in einem Winkel von 45 Grad, wobei der Beamsplitter so gestaltet ist, dass er die Strahlen von der Lichtquelle zur retroreflektierenden Fläche im wesentlichen passieren lässt. Die Projektion der Abbildung wird im weiteren von der retroreflektierenden Fläche in Richtung auf die Lichtquelle zurückgeworfen und von dem nun in Strahlenrichtung vor der Lichtquelle angeordneten Beamsplitter um 90 Grad in Richtung des Betrachters abgelenkt. Der zuvor dargestellte Stand der Technik weist den Nachteil auf, dass die Bautiefe der Vorrichtung wenigstens der Höhe der projizierten Abbildung entspricht. Eine Verwendung für großflächige Darstellungen, insbesondere mit beengtem Hinterraum, wie beispielsweise bei Werbetafeln, ist damit nicht möglich oder erschwert sowie mit erhöhten Kosten verbunden. Bauartbedingt weist die zuvor genannte Vorrichtung den weiteren Nachteil auf das die virtuelle Projektionstiefe, also dem Ort an dem der Betrachter die projizierte Darstellung vermeintlich wahrnimmt, ebenfalls mindestens der Abbildungshöhe, bzw. der Höhe der Projektionsfläche, entspricht. Ein Schweben der Darstellung kurz beabstandet von der Vorrichtung ist damit bei größeren Darstellungen nicht möglich. Die bauartbedingten langen Strahlengänge von der Lichtquelle bis zur virtuellen Darstellung reduzieren weiterhin die Bildqualität und führen insbesondere zu einer verstärkten Unschärfe des virtuellen Bildes.

Die WO 99/53359 beschreibt eine Vorrichtung gemäß der WO82/00911, wobei weiterhin zwischen dem Beamsplitter und der retroreflektierenden Fläche ein konkaver Spiegel angeordnet ist. Der Spiegel dient dabei dazu die Qualität der Darstellung des virtuellen Bildes zu verbessern. Größere Bilddarstellungen benötigen dementsprechend große konkave Spiegel, welche aufwändig und teuer sind.

Die EP 0460873 beschreibt ebenfalls eine Vorrichtung gemäß der WO82/00911. Weiterhin offenbart die EP 0460873 eine gattungsgemäße Vorrichtung unter Verwendung von Zircularpolarisatoren. Der Aufbau hat die Abfolge: Bildgebende Lichtquelle, zirkularer Polarisator, halbdurchlässiger (half silvered) Retroreflektor, zirkular dichriotischer Beamsplitter in Form einer Flüssigkristalllage und Betrachter. Ein Nachteil dieses Standes der Technik ist der Verlust an Leuchtstärke aufgrund des halbdurchlässigen Retroreflektors.

GB-A-2284680 beschreibt auch eine Vorrichtung zur Erzeugung einer virtuellen Abbildung umfassend eine reale Lichtquelle, einen Retroreflektormaterial und einen semi-transparenten Spiegel.

Aufgabe der Vorliegenden Erfindung ist es Vorrichtung und Verfahren für die virtuelle Darstellung einer Lichtquelle oder eines Bildes bereitzustellen, die die Nachteile des Standes der Technik überwinden. Weitere Teilaufgabe war es eine Vorrichtung der genannten Art bereitzustellen, die eine geringe Bautiefe aufweist und kostengünstig herzustellen ist. Weitere Teilaufgabe war es eine Vorrichtung der genannten Art bereitzustellen, bei der die Projektionstiefe der virtuellen Darstellung mit einfachen Mitteln frei eingestellt werden kann. Ebenfalls war es Teilaufgabe der vorliegenden Erfindung einen virtuellen Schalter bereitzustellen.

Gelöst werden die Aufgaben mit den technischen Merkmalen des unabhängigen Anspruches. Bevorzugte Ausführungsformen sind in den abhängigen Ansprüchen dargestellt.

### Allgemeiner Teil der Beschreibung

Die erfindungsgemäße Vorrichtung zur Darstellung einer virtuellen Lichtquelle umfasst in ihrer einfachsten Ausführungsform wenigstens eine reale Lichtquelle, eine Abschirmung der realen Lichtquelle gegen direkte Sicht durch den Betrachter, einen semi-transparenten Spiegel sowie wenigstens einen undurchlässiger Retroreflektor. Erfindungswesentlich ist, dass der semi-transparente Spiegel im wesentlichen parallel zu dem Retroreflektor angeordnet ist. Die reale Lichtquelle ist dabei zwischen den Ebenen des Retroreflektors und des semi-transparenten Spiegels angeordnet.

Im Sinne der vorliegenden Beschreibung bedeutet reale Lichtquelle, jede Lichtquelle die divergentes Licht abgibt. Dies umfasst, in nicht abschließender Aufzählung, Punktlichtquellen, wie Glühfadenbirnen oder LEDs, längserstreckte Lichtquellen, wie Entladungsröhren oder ähnliches sowie Kombinationen hieraus. Eine reale Lichtquelle mit divergentem Licht kann auch durch eine Laserlichtquelle gebildet werden, welche mit optischen Zusatzeinrichtungen wie beispielsweise Linsen versehen sind, um das parallele Laserlicht in eine divergente Lichtquelle umzuwandeln.

Soweit im Zusammenhang mit dieser Beschreibung der Begriff von dem Ort oder Standort des Betrachters verwendet wird, so versteht es sich, dass hiermit der Ort oder Standort seiner visuellen Sinnesorgane gemeint ist.

Retroreflektoren unterschiedlichen Typs sind bekannt und im Handel erhältlich. Bekannte Hersteller sind die Firmen 3M und Reflexite. Grundsätzlich sind alle Retroreflektoren für die Erfindung geeignet. Im Rahmen der Erfindung können die unterschiedlichen Eigenschaften der jeweiligen Typen von Retroreflektoren genutzt werden. So können Retroreflektoren des Prismatypes in der vorliegenden Erfindung Verwendung finden, wenn einen Funkel- oder Sterncheneffekt bei der Darstellung der virtuellen Lichtquelle gewünscht ist. Es zeigte sich, dass zur Erlangung einer Rundform oder Kugelform der virtuellen Lichtquelle die Verwendung von Retroreflektoren des Kugel- oder Linsentyps besonders geeignet sind.

Eine wesentliche Komponente der erfindungsgemäßen Vorrichtung ist der Abschirmung der realen Lichtquelle gegen direkte Sicht durch den Betrachter. An das Material der Abschirmung selbst sind keine wesentlichen Anforderungen gestellt, als das es die direkte Sicht unterbindet. Die Abschirmung ist in unmittelbarer Nähe der realen Lichtquelle angeordnet. Aus Letzterem ergibt sich der Vorteil, das konstruktiv die Befestigung der Abschirmung an der Lichtquelle oder dem Lichtquellenträger, erfolgen kann, was konstruktiv einfacher ist als die freie Positionierung der Abschirmung im Raum vor der realen Lichtquelle. Auf die Funktion der erfindungsgemäßen Vorrichtung hat dies jedoch keinen Einfluss. Auch ist es möglich, die Abschirmung als integralen Bestandteil der realen Lichtquelle auszuführen. Beispielsweise durch teilweises Aufbringen einer lichtundurchlässigen Beschichtung auf den Leuchtkörper. Aus Kostengründen ist es jedoch Bevorzugt die Abschirmung als eigenständige Baugruppe auszuführen. Letzteres ermöglicht die Verwendung von handelüblichen Leuchtkörpern als reale Lichtquelle, ohne das diese einem besonderen Modifikationsschritt unterzogen werden müssen.

Ein weiteres erfindungswesentliches Merkmal ist, das jeder in der Vorrichtung angeordneten realen Lichtquelle die eine virtuellen Lichtquelle erzeugen soll, eine eigene Abschirmung zugeordnet ist. Hieraus ergibt sich ein weiterer Vorteil. Bei Vorrichtungen mit zwei oder mehrer realen Lichtquellen kann die Ausformung der jeweiligen Abschirmungen und damit ihr unterschiedlicher Abschattungsbereich sowie der verbotene Bereich für alle virtuellen Lichtquellen gleich oder individuell eingestellt werden. Während bei im wesentlichen übereinstimmendem Abschattungsbereich und verbotenen Bereich der Betrachter immer alle virtuellen Lichtquellen wahrnehmen kann, soweit er sich im dem Bereich aufhält in dem die Wahrnehmung möglich ist, so kann bei individueller Ausgestaltung des Schattenbereiches und/oder des verbotenen Bereiches die Vorrichtung so ausgeführt werden, dass der Betrachter von einem Standort aus eine somit vorreingestellte Auswahl an virtuellen Lichtquellen wahrnimmt, während er nach Standortwechsel eine andere vorreingestellte Auswahl an virtuellen Lichtquellen wahrnimmt. Mit anderen Worten kann die Wahrnehmung der jeweiligen virtuellen Lichtquellen für den Betrachter Standortabhängig eingestellt werden, soweit dies für die jeweilige Anwendung gewünscht ist.

Im Umfange der Erfindung kann die Abschirmung bei einer Punktlichtquelle halbschalenförmig und bei einer längserstreckten realen Lichtquelle rinnenförmig ausgestaltet sein. Dieser Kunstgriff erlaubt es, durch die Auswahl der jeweiligen Erstreckung und Ausdehnung der Abschirmung den Abschattungsbereich einzustellen in welchem der Betrachter sich aufhalten muss, um die virtuelle Lichtquelle erkennen zu können, wobei gleichzeitig die restlichen Baugruppen der Vorrichtung unverändert bleiben. Der Vorteil hieraus liegt auf der Hand. Insbesondere bei der Serienherstellung kann der Abschattungsbereich den individuellen Anwendungsbedürfnissen angepasst werden, indem unterschiedliche Halbschalen, bzw. Rinnen als Abschirmung verbaut werden, wobei die restlichen Baugruppen im Herstellungsvorgang unverändert bleiben.

Der Bereich von dem aus der Betrachter die virtuelle Lichtquelle wahrnehmen kann sowie der Ort an dem die virtuelle Lichtquelle dem Betrachter erscheint unterliegen geometrischen Gesetzmäßigkeiten. Hier liegt ein weiterer Vorteil der vorliegenden Erfindung. Durch Auswahl des Abstandes zwischen dem semi-transparenten Spiegel und dem Retroreflektormaterial in Verbindung mit der Positionierung der realen Lichtquelle hierzwischen, kann die Projektionstiefe der virtuellen Lichtquelle eingestellt werden und somit auf den Ort an dem die virtuelle Lichtquelle dem Betrachter erscheint Einfluss genommen werden. Im einfachsten Fall, wenn die reale Lichtquelle unmittelbar vor dem Retroreflektormaterial angeordnet ist, so beträgt die Projektionstiefe gleich dem Abstand zwischen dem Retroreflektormaterial und dem semi-transparenten Spiegel. Durch einfache Änderung des Abstandes zwischen diesen Baugruppen kann der Fachmann die Projektionstiefe in Abhängigkeit der jeweiligen Anwendung einstellen. Der Bereich von dem der Betrachter die virtuelle Lichtquelle wahrnehmen kann, wird wie beschrieben durch den Abschattungsbereich eingestellt. Zusammen erhält der Fachmann damit eine Vielzahl von Variationsmöglichkeiten, um die Vorrichtung den jeweils gewünschten Anforderungen anzupassen.

In Abhängigkeit der jeweiligen Verwendung der erfindungsgemäßen Vorrichtung kann es einen anwendungsbedingten Bereich geben, in dem sich der Betrachter aufhalten soll. Eine typische Anwendung wäre beispielsweise als senkrechte Werbe- oder Anzeigetafel die an einer Wand befestigt ist. Der anwendungsbedingte Standort des Betrachters wäre vor der Tafel und unterhalb der Anzeige. Eine andere typische Anwendung der Vorrichtung, ggf. in der Ausführungsform als virtueller Schalter, wäre ein flach angeordnetes Bedienpaneel. Der anwendungsbedingte Standort des Betrachters vor dem Bedienpaneel und oberhalb davon.

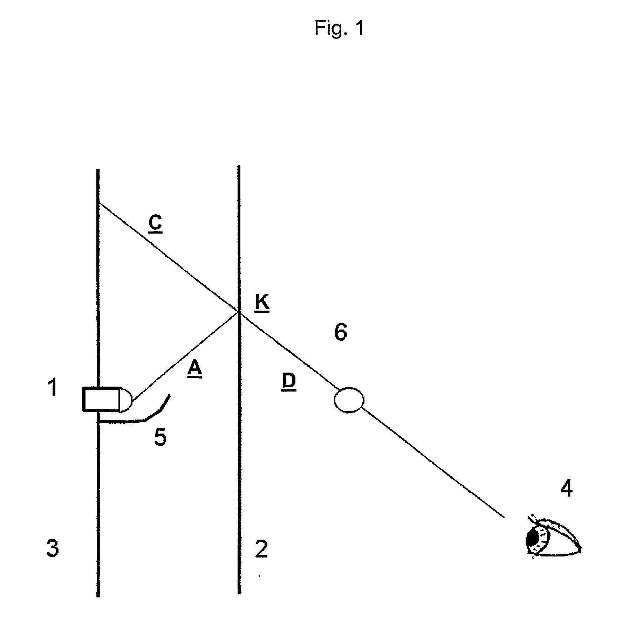

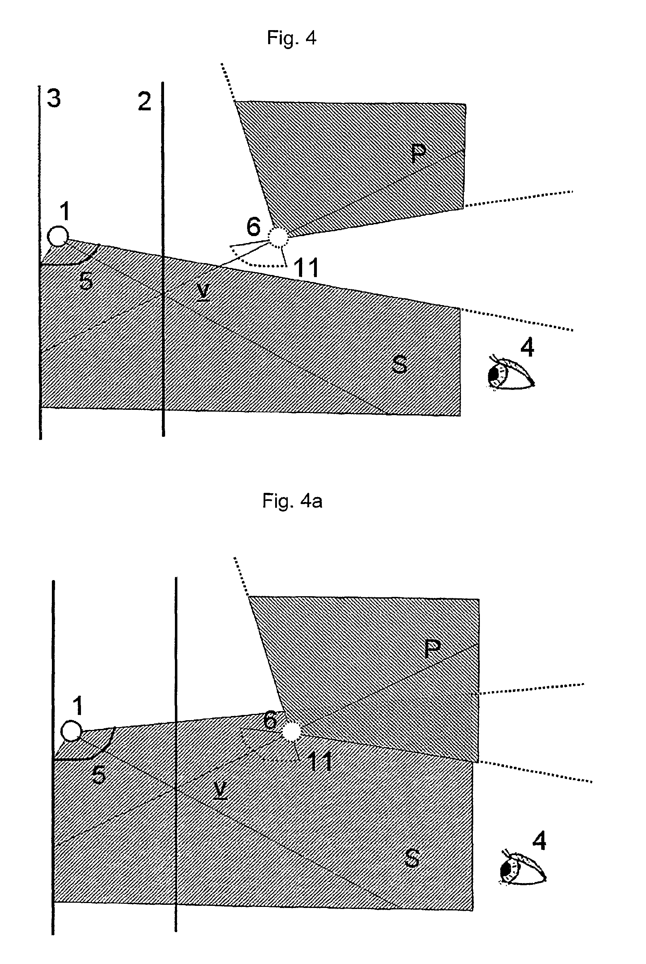

Ausgehend von den genannten anwendungsbedingten Standorten des Betrachters kann der Fachmann die erfindungsgemäße Vorrichtung ohne weiteres so aufführen, dass der Betrachter am genannten Standort die virtuelle Lichtquelle wahrnehmen kann. Hierzu genügt es, dass die reale Lichtquelle, der Betrachter und der in Zusammenhang mit Figur 1 erläuterte Punkt K auf dem semi-transparenten Spiegel ein Dreieck bilden, wobei der Betrachter sich weiterhin im Schattenbereich S (Figuren 4 und 4a) jedoch nicht im verbotenen Bereich P befindet.

Spezieller Teil der Beschreibung

Nachfolgend werden die Erfindung und weitere Ausführungsformen anhand der Figuren erläutert, wobei die Erfindung nicht auf die dargestellten Ausführungsformen beschränkt ist. Dabei zeigen:
Figur 1 die Vorrichtung zur virtuellen Darstellung einer Lichtquelle in ihrer einfachsten Ausführungsform unter Verwendung einer realen Punktlichtquelle;
Figur 2 die Vorrichtung nach Figur 1 in einer Ausführungsform zur verbesserten Bildgebung;
Figur 3 die Vorrichtung nach Figur 1 in einer Ausführungsform als virtueller Schalter;
Figuren 4 und 4a die einzuhaltenden geometrischen Vorgaben von realer Lichtquelle, Abschirmung und Betrachterstandort.

Figur 1 zeigt schematisiert den Grundaufbau der einfachsten Ausführungsform der Erfindung. In der Darstellung wird die reale Lichtquelle 1 durch eine Punktlichtquelle in Form einer LED gebildet. Auf der dem Betrachter 4 abgewandeten Seite der realen Lichtquelle 1 erstreckt sich ein Retroreflektormaterial 3. Wie zeichnerisch angedeutet können die elektrischen Leitungen sowie Halterungen der realen Lichtquelle 1 durch das Retroreflektormaterial 3 geführt werden. Im wesentlichen parallel zu dem Retroreflektormaterial 3 und davon beabstandet ist der semi-transparente Spiegel 2 angeordnet. Die Anordnung sowie der Abstand des semi-transparenten Spiegels 2 zum Retroreflektormaterial 3 sind ein wesentliches Element der Erfindung, wie nachfolgend noch erläutert wird.

In der dargestellten Ausführungsform ist die reale Lichtquelle 1 mit der Abschirmung 5 in Form eines halbkugelförmigen Sichtschutzes versehen. Die Abschirmung 5 in der dargestellten Form eignet sich insbesondere für Punktlichtquellen. Wie bereits ausgeführt dient die Abschirmung 5 dazu den direkten Sichtkontakt zwischen dem Betrachter 4 und der realen Lichtquelle 1 zu unterbinden. So kann in einer nicht dargestellten Ausführungsform die Abschirmung direkt auf den Leuchtkörper der realen Lichtquelle aufgebracht werden. Auch ist es möglich die Abschirmung als planes oder nahezu planes Element auszuführen, das zwischen dem Retroreflektormaterial 3 und dem semi-transparenten Spiegel 2 angeordnet ist. Auch ist es möglich die Abschirmung in den semi-transparenten Spiegel 2 zu integrieren, bzw. einen Teil des semi-transparenten Spiegels als Abschirmung auszuführen. Wesentlich ist dabei die geometrische Anordnung von realer Lichtquelle 1, Abschirmung 5, Betrachter 4 und sich daraus ergebend der Ort der virtuellen Darstellung, bzw. virtuellen Lichtquelle 6. Letzteres wird im Folgenden noch erläutert, wodurch der Fachmann in die Lage versetzt wird die genannten Ausführungsformen mit abgewandelter Abschirmung ohne weiteres im Rahmen der vorliegenden Erfindung auszuführen.

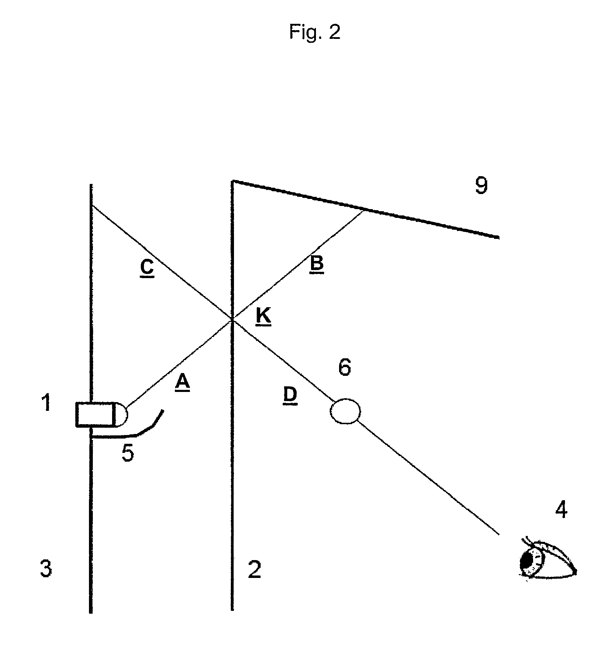

Die Funktionsweise der Vorrichtung wird beispielhaft an einen Strahlengang erläutert. Aus zeichnerischen Gründen sind die Vielzahl der weiteren Strahlengänge, die die divergente reale Lichtquelle 1 verlassen, nicht dargestellt. Ausgehend von der realen Lichtquelle 1 verläuft der exemplarische Strahlengang in Richtung auf den semi-transparenten Spiegel 2. Dieser Abschnitt des Strahlenganges ist mit dem Buchstaben A bezeichnet. Am semi-transparenten Spiegel 2 wird der Strahlengang am Punkt K in die Teile B und C geteilt. Der Teil des Strahlenganges B tritt durch den Spiegel hindurch (in Figur 2 dargestellt) und ist in der Ausführungsform nach Figur 1 für die virtuelle Darstellung verloren. Der andere Teil in Form des Strahlengangabschnitt C wird in Richtung auf das Retroreflektormaterial 3 gespiegelt. Die jeweiligen intensitätsmäßigen Anteile der Strahlengangabschnitte B und C, hervorgegangen aus dem Strahlengang des Abschnittes A sind von den Eigenschaften des semi-transparenten Spiegels 2 abhängig und können durch die Auswahl von Spiegeln mit unterschiedlichen Eigenschaften nach den Wünschen des Anwenders eingestellt werden.

Der Strahlenteil des Abschnittes C trifft auf das Retroreflektormaterial 3 und wird von diesem als Abschnitt C' in sich gespiegelt und auf den Punkt K zurückgeworfen. Der Abschnitt C' ist aus zeichnerischen Gründen nicht dargestellt. Am Punkt K wird der Strahl des Abschnittes C' wieder entsprechend der obigen Ausführungen geteilt, nämlich in die Abschnitte A' (ebenfalls aus zeichnerischen Gründen nicht dargestellt) welcher in die Lichtquelle 1 zurückgeworfen wird und den Abschnitt D welcher zur Darstellung der virtuellen Darstellung, bzw. Lichtquelle 6 dient, die vom Betrachter 4 erkannt wird.

Es zeigte sich, das die Projektionstiefe der virtuellen Lichtquelle 6, das heißt der Abstand zwischen der erfindungsgemäßen Vorrichtung und dem Ort an dem der Betrachter die virtuelle Lichtquelle wahrnimmt, im wesentlichen durch den Abstand des Retroreflektormaterials 3 und dem semi-transparenten Spiegel 2 eingestellt wird. Bei Anordnung der realen Lichtquelle in unmittelbarer Nähe des Retroreflektormaterials 3 ist die Projektionstiefe etwa gleich dem Abstand zwischen dem Retroreflektormaterial 3 und dem semi-transparenten Spiegel 2. Die Vorteile hieraus liegen auf der Hand.

Da der Abstand zwischen den zuletzt genannten Baugruppen nahezu frei eingestellt werden kann, so kann in Abhängigkeit davon die Projektionstiefe für die virtuelle Lichtquelle 6 ebenfalls frei eingestellt werden. Durch diesen Kunstgriff kann, soweit vom Anwender gewünscht, die virtuelle Lichtquelle 6 so eingestellt werden, dass sie vom Betrachter in unmittelbarer Nähe zur erfindungsgemäßen Vorrichtung wahrgenommen wird. Umgekehrt kann durch eine geringfügige Abwandlung der erfindungsgemäßen Vorrichtung, nämlich der Vergrößerung des Abstandes zwischen dem Retroreflektormaterial 3 und dem semi-transparenten Spiegel 2, die virtuelle Lichtquelle 6 so eingestellt werden, dass sie vom Betrachter in größerem Abstand zur erfindungsgemäßen Vorrichtung wahrgenommen wird.

Gemäß einer nicht dargestellten Ausführungsform kann es zweckmäßig sein, die dem Betrachter 4 zugewandte Seite der Abschirmung 5 ebenfalls mit einem Retroreflektormaterial zu versehen. Dies gilt insbesondere soweit die Vorrichtung mit 2 oder mehr realen Lichtquellen 1 ausgestattet ist, welche eigenständige Abschirmungen 5 aufweisen, die in unmittelbare Nähe der zugeordneten realen Lichtquelle 1 angeordnet sind. Bei einer solchen Ausführungsform kann es unter ungünstigen Umständen zur Ausbildung von blinden Flecken kommen, in denen der Betrachter 4 eine virtuelle Lichtquelle nicht wahrnehmen kann, obwohl die grundsätzlichen geometrischen Bedingungen für die Wahrnehmung der virtuellen Lichtquelle erfüllt sind. Zur Ausbildung eines solchen blinden Fleckes kann es kommen, wenn der Strahlengangabschnitt C einer realen Lichtquelle 1 auf die dem Betrachter 4. zugewandten Seite der Abschirmung 5 einer zweiten realen Lichtquelle geworfen wird. Soweit die Abschirmung 5 der zweiten realen Lichtquelle nicht mit einem Retroreflektor versehen ist, kommt es zum Verlust des Strahlenganges welcher dann nicht mehr zur Bildung der virtuellen Lichtquelle 6 zur Verfügung steht. Hieraus ergibt sich auch, das Größe und Ausdehnung eines genannten blinden Fleckes unmittelbar mit Größe und Ausdehnung der jeweiligen Abschirmung 5 korrelieren. Durch die Maßnahme, die dem Betrachter 4 zugewandte Seite der Abschirmungen 5 mit einem Retroreflektormaterial zu versehen, kann die Bildung der genannten blinden Flecke wirkungsvoll vermieden werden. Es versteht sich, das die genannte Maßnahme nicht nur auf Abschirmungen 5 beschränkt ist die in unmittelbarer Nähe der realen Lichtquelle 1 angeordnet sind, sonder auf alle Abschirmungen angewandt werden kann, die zwischen dem Retroreflektormaterial 3 und dem semi-transparenten Spiegel 2 angeordnet sind.

Figur 2 betrifft eine abgewandelte Ausführungsform der Vorrichtung nach Figur 1 mit verbesserter Bilddarstellung. Die Ausführungsform nach Figur 2 ist gleich der nach Figur 1, wobei weiterhin ein zweites Retroreflektormaterial 9 Verwendung findet. Das zweite Retroreflektormaterial 9 ist dabei auf der Betrachterseite des semi-transparenten Spiegels 2 angeordnet und erstreckt sich im wesentlichen von dem Spiegel 2 weg. Die genaue Positionierung und geometrische Erstreckung des zweiten Retroreflektormaterials 9 sind dabei unkritisch und können den Anforderungen des jeweiligen Verwendungszweckes der Vorrichtung angepasst werden. Erfindungswesentlich ist dabei allein, das Strahlabschnitt B, wie zu Figur 1 erläutert, auf das zweite Retroreflektormaterial 9 trifft.

Der Strahlengang in der Ausführungsform nach Figur 2 entspricht dem nach Figur 1. Abweichend davon ist jedoch der Abschnitt B des Strahlenganges für die Bilddarstellung nicht verloren. Der Strahlenteil des Abschnittes B trifft auf das zweite Retroreflektormaterial 9 und wird von diesem in seinem Strahlengang in bereits beschriebener Weise zurückgeworfen. Der so gebildete Abschnitt B' ist aus zeichnerischen Gründen nicht dargestellt. Am Punkt K wird der Strahlenteil B' ebenfalls in der bereits beschriebenen Weise gespiegelt oder teilweise gespiegelt und bildet den Abschnitt D' (nicht dargestellt). Die Abschnitte D und D' sind in ihrer geometrischen Lage identisch, wodurch sich die Strahlenanteile von D und D' addieren und zu einer verbesserten, insbesondere verstärkten, Darstellung der virtuellen Lichtquelle 6 führen.

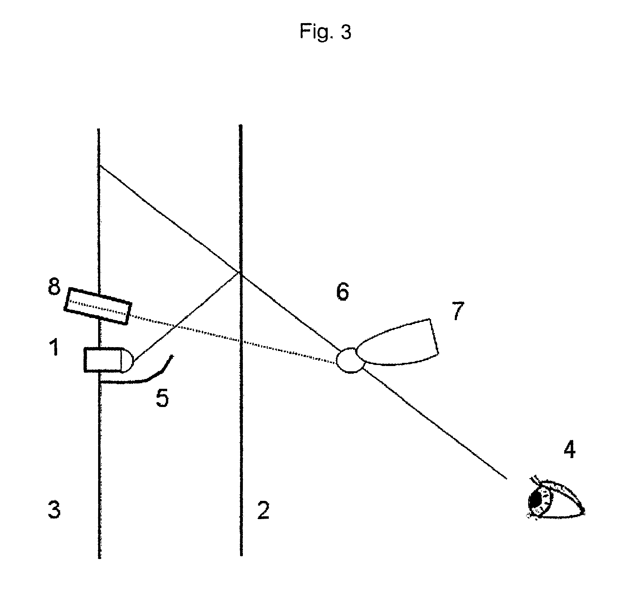

Figur 3 zeigt eine Anwendung der erfindungsgemäßen Vorrichtung nach Figur 1 als virtueller Schalter. Es versteht sich, das die bildverstärkenden Eigenschaften eines zweiten Retroreflektormaterial wie in Figur 2 gezeigt auch in dieser Ausführungsform Anwendung finden können. Die Vorrichtung für einen virtuellen Schalter umfasst alle Merkmale der Vorrichtung nach Figur 1, auf deren Beschreibung hiermit verwiesen wird. Weiterhin umfasst der virtuelle Schalter nach Figur 3 einen Sensor 8.

Die Auswahl des Typs des Sensors 8 unterliegt keinen wesentlichen Beschränkungen. Erfindungswesentlich bei der Auswahl des Sensors ist, dass dieser in der Lage ist das Eindringen eines Objektes, wie beispielsweise eines Fingers, einer Hand oder eines Stiftes, in den zu überwachenden Bereich zu erkennen, nachfolgend zum Zwecke der Beschreibung als Fingerkuppe 7 bezeichnet. Derartige Sensoren sind bekannt und im Handel erhältlich. Beispielhaft seinen nur optische Sensoren genannt, die im Bereich des sichtbaren oder infraroten Lichtes arbeiten. Geeignetenweise kann der Sensor 8 so ausgewählt werden, dass das Sichtfenster seines Arbeitsbereiches beschränkt ist. Dies kann in einfacher Weise durch Masken oder Kollimatoren vor dem Sensor erreicht werden. Auch derartige Sensoren sind im Handel erhältlich.

Insbesondere bei einer Punktlichtquelle als reale Lichtquelle 1, kann der Arbeitsbereich des Sensors 8 in seinem Querschnitt an die Größe der virtuellen Lichtquelle 6 angepasst werden. In Abhängigkeit der jeweilige Anwendung kann der Arbeitsbereich größer, kleiner oder gleich der Größe der virtuellen Lichtquelle 6 sein.

In der Ausführungsform nach Figur 3 ist der Querschnitt des Arbeitsbereiches des Sensors 8 etwa gleich der Größe der virtuellen Lichtquelle 6, bezogen auf den Ort an dem der Betrachter die virtuelle Lichtquelle 6 wahrnimmt. Die Ausrichtung des Sensors 8 ist durch eine gestrichelte Linie angedeutet. Wenn nun der Betrachter 4 versucht die virtuelle Lichtquelle zu berühren, dargestellt durch die Fingerkuppe 7, so führt er seinen Finger in den Arbeitsbereich des Sensors 8. Der Sensor 8 detektiert die Anwesenheit der Fingerkuppe 7 des Betrachters 4 und löst einen Schaltvorgang gemäß den Vorgaben der jeweiligen Anwendung der erfindungsgemäßen Vorrichtung aus.

In einer bevorzugten Ausführungsform ist der Sensor 8 ein passiver optischer Sensor, der auf die Wellenlänge der Strahlung der ihm zugeordneten realen Lichtquelle 1 reagiert, wobei die Ansprechschwelle des Sensors so gewählt oder eingestellt ist, dass der Sensor auf die allgemeine Hintergrundstrahlung der gleichen Wellenlänge nicht anspricht. Diese Ausführungsform ist besonders für die Herstellung von präzise und fehlerfrei arbeitenden virtuellen und damit berührungslos tätigen Schaltern geeignet.

Wenn in dieser Ausführungsform der Betrachter 4 versucht die virtuelle Lichtquelle 6 zu berühren und dazu seinen Finger 7 an den Ort der virtuellen Lichtquelle 6 bewegt, so wird, aufgrund der höheren Lichtintensität am Ort der virtuellen Lichtquelle 6, von dem Finger 7 ein erhöhtes Rückstrahlsignal an Sensor 8 zurückgeworfen, welches die Schaltschwelle des Sensors 8 übersteigt. In bekannter Weise kann dann durch den Sensor 8 ein beliebiges Schaltsignal ausgelöst werden. Die Schaltschwelle des Sensors kann so ausgelegt werden, dass nur ein exaktes Positionieren der Fingerkuppe 7 am Ort der virtuellen Lichtquelle hinreichend Rückstrahlung erzeugt, um den Sensor ansprechen zu lassen, während nur teilweises "berühren" der virtuellen Lichtquelle 6 und damit verbunden nur einer geringeren Rückstrahlung unterhalb der Schaltschwelle liegt. Insbesondere durch letztere Maßnahme kann eine hohe Resistenz des virtuellen Schalters gegen falsch-positives-Auslösen sichergestellt werden.

Soweit für die jeweilige Anwendung gewünscht, so kann über die virtuelle Lichtquelle 6 ein Rücksignal an den Bediener des virtuellen Schalters gegeben werden. In der einfachsten Weise kann dies durch den Wechsel der Farbe des Lichtes der virtuellen Lichtquelle 6, beispielsweise von weißem Licht auf rotes Licht, geschehen. Sogenannte mehrfarbige LEDs sind hierfür besonders geeignet.

Durch Zusammenwirken mehrerer virtueller Schalter ist möglich eine Schaltmatrix für die Bedienung komplexerer Geräte zusammenzustellen.

Durch Zusammenwirken mehrer Sensoren 8 mit entweder mehreren realen Punktlichtquellen oder einer oder mehrer realen längserstreckten Lichtquellen sowie Kombinationen hieraus, können auch komplexere Schaltungselemente als virtuelle Schalter erzeugt werden. Beispielsweise Schiebe- oder Drehregler. Dabei wird die Bewegung des Fingers 7 mittels wenigstens zweier Sensoren 8 über die virtuelle Darstellung verfolgt und entsprechend umgesetzt.

Der virtuelle Schalter gemäß der vorliegenden Erfindung ist für alle Anwendungen geeignet, in denen eine berührungslose Bedienung von Geräten gewünscht ist. Dies kann aus ästhetischen Gründen sein oder auch zur Verbesserung der Vandalismussicherheit bei Geräten im öffentlichen Bereich sowie zu Verhinderung der Übertragung von Keimen bei Geräten im Gesundheitsbereich.

Die Figuren 4 und 4a erläutern die jeweils notwendig Positionierung des Betrachters 4, um ihm das Erkennen der virtuellen Lichtquelle 6 zu ermöglichen, insbesondere in Abhängigkeit der Ausgestaltung der Abschirmung 5. Wie bereits erläutert sollte ein direkter Sichtkontakt zwischen dem Betrachter 4 und der realen Lichtquelle 1 vermieden werden. Bei einem direkten Sichtkontakt kann es sonst zu einer Überstrahlung der virtuellen Lichtquelle 6 durch die reale Lichtquelle 1 kommen, was die Wahrnehmung der virtuellen Lichtquelle 6 durch den Betrachter 4 beeinträchtigt oder schlimmstenfalls unmöglich macht. Verursacht wird dies durch die Tatsache, das die virtuelle Lichtquelle 6 aufgrund der Art Ihrer Erzeugung immer eine geringere Intensität oder Leuchtstärke hat als die sie erzeugende reale Lichtquelle 1.

Wie ebenfalls schon erläutert, wird der direkte Sichtkontakt durch eine Abschirmung 5 unterbunden. Zum Zwecke der Beschreibung wird für letzteres der Begriff Abschattung verwendet und der daraus resultierende Raum in dem kein direkter Sichtkontakt möglich ist, als Schattenbereich S bezeichnet. In den zeichnerischen Darstellungen nach Figur 4 und 4a sind der Schattenbereich S und der noch zu erläuternde verbotene Bereich P abgebrochen dargestellt. Die Bereiche S und P erstrecken sich über die Zeichenblattgrenze hinaus, was durch die Strich-Punkt-Linienführung angedeutet ist. Aus der direkten Gegenüberstellung der Figuren 4 und 4a ist ersichtlich wie sich der Schattenbereich S gleichsinnig mit der Erstreckung der Abschirmung 5 vergrößert oder verkleinert.

Weiterhin ist in den Figuren 4 und 4a der verbotene Bereich P dargestellt. Ein Betrachter 4 im verbotenen Bereich P kann, unabhängig von dem bereits erläuterten Problem der Überstrahlung, die virtuelle Lichtquelle 6 nicht wahrnehmen. Die Ausdehnung des verbotenen Bereiches P ist, wie auch der Schattenbereich S, abhängig von der geometrischen Ausformung der Abschirmung 5. Daraus ergibt sich, das Größe und Ausdehnung des verbotenen Bereiches P ohne weiteres vom Fachmann vorherbestimmt oder eingestellt werden können.

Zum besseren Verständnis des verbotenen Bereiches P ist in den Figuren 4 und 4a die Projektion der Abschirmung 5 Strich-Punkt-Artig bei der virtuellen Lichtquelle 6 eingezeichnet und wird für die Zwecke der Beschreibung als Pseudoabschirmung 11 bezeichnet. Die Pseudoabschirmung 11 wird vom Betrachter 4 nicht wahrgenommen und dient im Sinne der Beschreibung ausschließlich dazu dem Fachmann ein Mittel an die Hand zu geben den verbotenen Bereich vorherzubestimmen.

Die Pseudoabschirmung 11 ist relativ zur virtuellen Lichtquelle 6 in ihrer Lage und Erstreckung identisch wie die Abschirmung 5 zur realen Lichtquelle 1, jedoch spiegelverkehrt. Aus der Rückprojektion der Grenzen der Pseudoabschirmung 11 durch die virtuelle Lichtquelle 6 ergeben sich die Grenzen des verbotenen Bereiches P. Zum besseren Verständnis des verbotenen Bereiches P ist in den Figuren 4 und 4a jeweils ein verbotener Strahlengang V eingezeichnet. Der verbotene Strahlengang V wäre ein Strahlengang wie er nötig wäre, um für einen Betrachter 4, der sich im verbotenen Bereich P aufhält, die virtuelle Lichtquelle erkennen zu lassen. Wie aus den Figuren ersichtlich, so müsste der verbotene Strahlengang V hierzu durch die Abschirmung 5 hindurchgehen. Letzteres ist aber nicht möglich und wird damit im Sinne dieser Beschreibung als verboten bezeichnet.

Zusammengefasst ergibt sich, das die optimale Position des Betrachters 4 im Schattenbereich S ist. Soweit es zu einer Überschneidung des Schattenbereiches S und dem Verbotenen Bereich P kommt, so darf sich die Position des Betrachter nicht im dem Überschneidungsbereich befinden.

## Patentansprüche

1. Vorrichtung zur Erzeugung einer virtuellen Lichtquelle, umfassend wenigstens eine reale Lichtquelle (1), einen Retroreflektormaterial (3) und einen semi-transparenten Spiegel (2), **dadurch gekennzeichnet, dass** die Vorrichtung weiterhin jeweils eine Abschirmung (5) zur Abschirmung der realen Lichtquelle (1) gegen direkte Sicht durch einen Betrachter (4) für jede der realen Lichtquellen (1) aufweist und die Abschirmung (5) in unmittelbarer Nähe der jeweiligen realen Lichtquelle (1) angeordnet ist, wobei weiterhin des Retroreflektormaterial (3) und der semi-transparente Spiegel (2) im wesentlichen parallel zueinander angeordnet sind und die wenigstens eine reale Lichtquelle (1) zwischen den Ebenen des Retroreflektormaterials (3) und des semi-transparenten Spiegels (2) angeordnet ist.

2. Vorrichtung nach Anspruch 1, **dadurch gekennzeichnet, dass** die Vorrichtung ein zweites Retroreflektormaterial (9) aufweist, wobei das zweite Retroreflektormaterial (9) betrachterseitig des semi-transparenten Spiegels (2) angeordnet ist und sich im wesentlichen von der Vorrichtung weg erstreckt.

3. Vorrichtung nach Anspruch 1 oder 2, **dadurch gekennzeichnet, dass** die Abschirmung (5) jeweils Betrachterseitig mit einem Retroreflektormaterial versehen ist.

4. Vorrichtung nach einem der vorhergehenden Ansprüche, **dadurch gekennzeichnet, dass** die Vorrichtung wenigstens zwei reale Lichtquellen (1) aufweist und die jeweiligen Abschirmungen (5) unterschiedlich zur Bildung unterschiedlicher Abschattungsbereiche (S) und / oder verbotener Bereiche (P) ausgeformt sind.

5. Vorrichtung nach einem der vorhergehenden Ansprüche, **dadurch gekennzeichnet, dass** die Vorrichtung wenigstens einen Sensor (8) aufweist, wobei das Sichtfenster des Sensors (8) auf eine ihm zugeordnete virtuelle Lichtquelle (6) gerichtet ist.

6. Vorrichtung nach Anspruch 5, **dadurch gekennzeichnet, dass** der Sensor (8) ein passiver optischer Sensor ist, der auf die Wellenlänge der Strahlung der ihm zugeordneten realen Lichtquelle (1) reagiert.

7. Vorrichtung nach Anspruch 5 oder 6, **dadurch gekennzeichnet, dass** die Schaltschwelle des Sensors (8) so eingestellt ist, dass der Sensor (8) nur auf eine Intensität einer Rückstrahlung reagiert, die durch eine vollständiges Einbringen eines Objektes (7) in die virtuelle Lichtquelle (6) erzeugt wird.

8. Vorrichtung nach einem der Ansprüche 5 bis 7, **dadurch gekennzeichnet, dass** durch einen Farbwechsel des Lichtes der realen Lichtquelle (1) ein Ansprechen des Sensors (8) signalisiert wird.

9. Vorrichtung nach einem der Ansprüche 5 bis 8, **dadurch gekennzeichnet, dass** die Vorrichtung wenigstens eine längserstreckte oder zwei punktförmige virtuelle Lichtquellen (6) mit wenigsten zwei zugeordneten Sensoren (8) aufweist, wobei die Sensoren (8) eine Schaltermatrix bilden.

## Claims

1. A device for generating a virtual light source, comprising at least one real light source (1), a retroreflector material (3) and a semitransparent mirror (2), **characterised in that** the device further comprises one shield (5), respectively, for shielding the real light source (1) from direct view by an observer (4) for each of the real light sources (1) and the shield (5) is disposed in the immediate vicinity of the respective real light source (1), wherein, furthermore, the retroreflector material (3) and the semitransparent mirror (2) are disposed substantially parallel to each other and the at least one real light source (1) is disposed between planes of the retroreflector material (3) and of the semitransparent mirror (2).

2. The device according to claim 1, **characterised in that** the device comprises a second retroreflector material (9), wherein the second retroreflector material (9) is disposed on the side of the observer of the semitransparent mirror (2) and substantially extends away from the device.

3. The device according to claim 1 or 2, **characterised in that** the shield (5) is provided with a retroreflector material, in each case on the side of the observer.

4. The device according to any one of the preceding claims, **characterised in that** the device comprises at least two real light sources (1) and the respective shields (5) are formed differently for forming different shading regions (S) and/or prohibited regions (P).

5. The device according to any one of the preceding claims, **characterised in that** the device comprises at least one sensor (8), the window of the sensor (8) facing towards a virtual light source (6) assigned to it.

6. The device according to claim 5, **characterised in that** the sensor (8) is a passive optical sensor that reacts to the wavelength of the radiation of the real light source (1) assigned to it.

7. The device according to claim 5 or 6, **characterised in that** the switching threshold of the sensor (8) is set in such a manner than the sensor (8) reacts only to an intensity of a returning radiation that is generated by a complete introduction of an object (7) into the virtual light source (6).

8. The device according to any one of the claims 5 to 7, **characterised in that** a reaction of the sensor (8) is signalled by a change of colour of the light of the real light source (1).

9. The device according to any one of the claims 5 to 8, **characterised in that** the device comprises at least one longitudinally extended or two point-shaped light sources (6) with at least two assigned sensors (8), the sensors (8) forming a switch matrix.

## Revendications

1. Dispositif pour générer une source lumineuse virtuelle comportant au moins une source lumineuse réelle (1), un matériau réflecteur (3) et un miroir semi-transparent (2), **caractérisé en ce que** le dispositif comprend en outre un écran (5) chacun pour protéger la source lumineuse réelle (1) contre une vision directe par un spectateur (4) pour chacune des sources lumineuses réelles (1), et l'écran (5) est agencé à proximité immédiate de la source lumineuse réelle (1) respective, le matériau réflecteur (3) et le miroir semi-transparent (2) étant agencé en outre sensiblement en parallèle les uns aux autres, et l'au moins une source lumineuse réelle (1) est agencée entre les plans du matériau réflecteur (3) et le miroir semi-transparent (2).

2. Dispositif selon la revendication 1, **caractérisé en ce que** le dispositif comprend un seconde matériau réflecteur (9), le seconde matériau réflecteur (9) étant agencé au miroir semi-transparent (2) à coté du spectateur, et s'étendant sensiblement en l'éloignant du dispositif.

3. Dispositif selon la revendication 1 ou 2, **caractérisé en ce que** l'écran (5) est chacun muni d'un matériau réflecteur à coté du spectateur.

4. Dispositif selon l'une quelconque des revendications précédentes, **caractérisé en ce que** le dispositif comprend au moins deux sources lumineuses réelles (1), et les écrans (5) respectifs sont formés d'une manière différente pour constituer des zones d'ombres (S) différentes et/ou des zones interdites (P).

5. Dispositif selon l'une quelconque des revendications précédentes, **caractérisé en ce que** le dispositif comprend au moins un capteur (8), l'ouverture de contrôle (8) du capteur (8) étant orientée vers une source lumineuse virtuelle (6) qui lui est attribuée.

6. Dispositif selon la revendication 5, **caractérisé en ce que** le capteur (8) est un capteur optique passive qui répond à la longueur d'onde du rayonnement de source lumineuse réelle (1) qui lui est attribuée.

7. Dispositif selon la revendication 5 ou 6, **caractérisé en ce que** le seuil de commutation du capteur (8) est ajusté de sorte que le capteur (8) ne répond qu'à une intensité d'une réflexion qui est générée par un placement complet d'un objet (7) dans la source lumineuse virtuelle (6).

8. Dispositif selon l'une quelconque des revendications 5 à 7, **caractérisé en ce que** par un changement de couleur de la lumière de la source lumineuse réelle (1) une réponse du capteur (8) est signalée.

9. Dispositif selon l'une quelconque des revendications 5 à 8, **caractérisé en ce que** le dispositif comprend au moins source lumineuse allongée ou deux sources lumineuses ponctuelles virtuelles (6) avec au moins deux capteurs (8) attribués, les capteurs (8) formant une matrice de commutation.
